# EUROPEAN PATENT APPLICATION

(11) **EP 2 606 731 A1**
(43) Date of publication of application: **26.06.2013**
(21) Application number: 11818173.4
(22) Date of filing: 08.08.2011
(51) Int. Cl.: A01N 43/40, A01N 43/12, A01N 43/16, A01P 7/04

(54) **COMPOSITION FOR PREVENTING/CONTROLLING HARMFUL ARTHROPODS AND METHOD FOR PREVENTING/CONTROLLING HARMFUL ARTHROPODS**

(30) Priority: 20.08.2010 JP 2010184723
(71) Applicant: Sumitomo Chemical Company Limited, Tokyo 104-8260 (JP)
(72) Inventor: SAKAMOTO, Norihisa, Hyogo 675-2333 (JP); SAKAMOTO, Emiko, Takarazuka-shi Hyogo 665-8555 (JP)
(74) Representative: Vossius & Partner
(86) International application number: PCT/JP2011/068489
(87) International publication number: WO 2012/023531

(57) **Abstract**

A harmful arthropod control composition comprising flonicamid, fthalide and kasugamycin hydrochloride.

## Description

### Technical Field

The present invention relates to a harmful arthropod control composition and a method for controlling a harmful arthropod.

### Background Art

Heretofore, various compounds are known as active ingredients in harmful arthropod control compositions (see, for example, The Pesticide Manual-15th edition (published by BCPC); ISBN 978-1-901396-18-8).

### Disclosure of Invention

The present invention includes the following [1] to [5] :
[1] A harmful arthropod control composition comprising flonicamid, fthalide and kasugamycin hydrochloride.
[2] The harmful arthropod control composition according to the above [1], wherein the weight ratio of flonicamid to fthalide is from 100:1 to 1:100.
[3] The harmful arthropod control composition according to the above [2], wherein the weight ratio of flonicamid to kasugamycin hydrochloride is from 500:1 to 1:100.
[4] A method for controlling a harmful arthropod, which comprises applying an effective amount of the harmful arthropod control composition according to any one of the above [1] to [3] to a plant or an area in which a plant is grown.
[5] The method for controlling a harmful arthropod according to the above [4], wherein the plant or the area in which a plant is grown is rice or an area in which rice is grown.

### Mode for Carrying out the Invention

The harmful arthropod control composition of the present invention comprises flonicamid, fthalide and kasugamycin hydrochloride.

Flonicamid is a known compound and can be obtained, for example, by a method described in JP 2994182 B.

Both of fthalide and kasugamycin hydrochloride are known compounds, and described, for example, at pages 904 and 685 of "The Pesticide Manual-15th edition (published by BCPC); ISBN 978-1-901396-18-8". These compounds can be obtained from commercial sources or produced by known methods.

In the harmful arthropod control composition of the present invention, the weight ratio of flonicamid to fthalide (= flonicamid:fthalide) is generally from 1000:1 to 1:1000, preferebly from 100:1 to 1:100, more preferebly from 20:1 to 1:20.

In the harmful arthropod control composition of the present invention, the weight ratio of flonicamid to kasugamycin hydrochloride (= flonicamid:kasugamycin hydrochloride) is generally from 5000:1 to 1:1000, preferebly from 500:1 to 1:100, more preferebly from 50:1 to 1:10.

In the harmful arthropod control composition of the present invention, the weight ratio of flonicamid, fthalide and kasugamycin hydrochloride is not particularly limited. However, fthalide is generally from 0.1 to 100000 parts by weight, preferably from 1 to 10000 parts by weight, and kasugamycin hydrochloride is generally from 0.02 to 100000 parts by weight, preferably from 0.2 to 10000 parts by weight, relative to 100 parts by weight of flonicamid.

The harmful arthropod control composition of the present invention may comprise other pesticide ingredients in addition to flonicamid, fthalide and kasugamycin hydrochloride. Examples of the other pesticide ingredient include validamycin A. Validamycin A is described, for example, at page 1187 of "The Pesticide Manual-15th edition (published by BCPC); ISBN 978-1-901396-18-8", and can be obtained from commercial sources or produced by known methods.

When the harmful arthropod control composition of the present invention comprises validamycin A, the amount of validamycin A is not particularly limited. However, validamycin A is generally from 0.02 to 100000 parts by weight, preferably from 0.2 to 10000 parts by weight, relative to 100 parts by weight of flonicamid.

The harmful arthropod control composition of the present invention may be prepared by simply mixing flonicamid, fthalide and kasugamycin hydrochloride, or by mixing flonicamid, fthalide and kasugamycin hydrochloride and an inert carrier, and if necessary, a surfactant and/or other formulation additives, and then formulating the mixture into a formulation such as an oil solution, an emulsifiable concentrate, a suspension concentrate, a wettable powder, a water dispersible granule, a dust, or a granule.

The harmful arthropod control composition of the present invention further comprising validamycin A can be produced by adding validamycin A when mixing flonicamid, fthalide and kasugamycin hydrochloride as described above.

Thus formulated harmful arthropod control composition may be used directly, or after the addition of other inert ingredients such as water, sand and vegetable oil, as a harmful arthropod control agent.

The total amount of flonicamid, fthalide and kasugamycin hydrochloride (and validamycin A, if present) in the harmful arthropod control composition of the present invention is generally from 0.01 to 99% by weight, preferably from 0.1 to 90% by weight, more preferably from 0.5 to 70% by weight.

Examples of the inert carrier include solid carriers and liquid carriers.

Examples of the solid carrier to be used for formulation of the harmful arthropod control composition include fine powders or granules of minerals (e.g., kaolin clay, attapulgite clay, bentonite, montmorillonite, acidic white clay, pyrophylite, talc, diatomaceous earth, and calicite); natural organic substances (e.g., corncob flour, and walnut shell flour), synthetic organic substances (e.g., urea); salts (e.g., calcium carbonate, and ammonium sulfate); and synthetic inorganic substances (e.g., synthetic hydrated silicon oxide). Examples of the liquid carrier include aromatic hydrocarbons (e.g., xylene, alkylbenzene, and methyl naphthalene); alcohols (e.g., 2-propanol, ethylene glycol, propylene glycol, and ethylene glycol monoethyl ether); ketones (e.g., acetone, cyclohexanone, and isophorone); vegetable oils (e.g., soybean oil, and cotton oil); petroleum-based aliphatic hydrocarbons; esters; dimethylsulfoxide; acetonitrile; and water.

Examples of the surfactant include anionic surfactants (e.g., alkyl sulfate ester salts, alkylaryl sulfonates, dialkyl sulfosuccinates, polyoxyethylene alkylaryl ether phosphate ester salts, ligninsulfonates, and naphthalene sulfonate formaldehyde polycondensates), nonionic surfactants (e.g., polyoxyethylene alkylaryl ethers, polyoxyethylene alkylpolyoxypropylene block copolymers, and sorbitan fatty acid esters), and cationic surfactants (e.g., alkyl trimethyl ammonium salts).

Examples of the other formulation additive include water-soluble polymers (e.g., polyvinyl alcohol, and polyvinyl pyrrolidone), polysaccharides [e.g., gum arabic, alginic acid and salts thereof, CMC (carboxymethyl cellulose), and xanthane gum], inorganic substances (e.g., aluminum magnesium silicate, and alumina-sol), preservatives, colorants, and stabilizers [e.g. isopropyl acid phosphate (PAP), and BHT].

The harmful arthropod control composition of the present invention can be used for protecting plants from damage due to eating or sucking by harmful arthropods such as harmful insects and harmful ticks.

Examples of the harmful arthropod on which the harmful arthropod control composition of the present invention has a controlling effect include as described below:
Hemiptera: Delphacidae such as *Laodelphax striatellus, Nilaparvata lugens,* and *Sogatella furcifera;* Deltocephalidae such as *Nephotettix cincticeps, Nephotettix virescens, Recilia dorsalis,* and *Empoasca onukii;* Aphididae such as *Aphis gossypii, Myzus persicae, Brevicoryne brassicae, Aphis spiraecola, Macrosiphum euphorbiae, Aulacorthum solani, Rhopalosiphum padi, Toxoptera citricidus, Hyalopterus pruni,* and *Eriosoma lanigerum;* Pentatomidae such as *Nezara antennata, Trigonotylus caelestialium, Graphosoma rubrolineatum, Eysarcoris lewisi, Riptortus clavetus, Leptocorisa chinensis, Eysarcoris parvus, Halyomorpha mista, Nezara viridula,* and *Lygus lineolaris;* Aleyrodidae such as *Trialeurodes vaporariorum, Bemisia tabaci, Dialeurodes citri,* and *Aleurocanthus spiniferus;* Coccoidea such as *Aonidiella aurantii, Comstockaspis perniciosa, Unaspis citri, Ceroplastes rubens, Icerya purchasi, Planococcus kraunhiae, Pseudococcus longispinis,* and *Pseudaulacaspis pentagona;* Tingidae; Cimicoidea such as *Cimex lectularius;* Psyllidae such as *Cacopsylla pyricola;* etc.
Thysanoptera: Thripidae such as *Frankliniella occidentalis, Thrips parmi, Scirtothrips dorsalis, Thrips tabaci, Frankliniella intonsa, Frankliniella fusca, Thrips tabaci, Stenchaetothrips biformis,* and *Haplothrips aculeatus;* etc.

Among the above harmful arthropods, preferred are Hemiptera such as Delphacidae, Deltocephalidae, Aphididae, Pentatomidae, more preferred are Delphacidae and Aphididae.

The harmful arthropod control composition of the present invention may be used for controlling plant diseases such as rice blast disease caused by *Magnaporthe grisea* or rice sheath blight disease caused by *Rhizoctonia solani.*

The harmful arthropod control composition of the present invention can be applied to a plant or an area in which a plant is grown to control harmful arthropods therein. The plant as used herein include the stems and leaves of plants, the flowers of plants, the fruits of plants, the seeds of plants, etc.

The method for controlling a harmful arthropod of the present invention comprises applying an effective amount of the harmful arthropod control composition of the present invention to a plant or an area in which a plant is grown.

The method for controlling a harmful arthropod of the present invention comprises applying, for example, the harmful arthropod control composition of the present invention to the stems and leaves of plants such as foliage application, or to an area in which a plant is grown such as soil application and submerged application.

When the harmful arthropod control composition of the present invention is applied to a plant or an area in which a plant is grown, the application amount varies depending on the kinds of plant to be protected, the species or population size of harmful arthropod to be controlled, the form of a formulation, the timing of application, weather conditions, etc., but is generally within a range from 0.5 to 3,000 g, preferably from 5 to 300 g per 1,000 m² of an area where a plant is grown, in terms of the total amount of flonicamid, fthalide and kasugamycin hydrochloride.

The harmful arthropod control composition of the present invention in the form of an emulsifiable concentrate, a wettable powder or a suspension concentrate is generally applied after dilution with water. In this case, the total concentration of flonicamid, fthalide and kasugamycin hydrochloride is generally from 0.00001 to 10% by weight, preferably from 0.0001 to 5% by weight.

The harmful arthropod control composition of the present invention in the form of a dust or a granule is generally applied as it is without dilution.

Examples of the application of the harmful arthropod control composition of the present invention to the stems and leaves of plants include foliage application, spraying by using helicopters, aerial application, etc.

Examples of the plant to which the harmful arthropod control composition of the present invention can be applied include as described below:
Crops: corn, rice, wheat, barley, rye, oat, sorghum, cotton, soybean, peanut, buckwheat, sugar beet, rapeseed, sunflower, sugar cane, tobacco, etc.;
Vegetables: Solanaceae vegetables (eggplant, tomato, green pepper, hot pepper, potato, etc.), Cucurbitaceae vegetables (cucumber, pumpkin, zucchini, watermelon, melon, etc.), Cruciferae vegetables (rape, Japanese radish, turnip, horseradish, kohlrabi, Chinese cabbage, cabbage, brown mustard, broccoli, cauliflower, etc.), Compositae vegetables (burdock, garland chrysanthemum, artichoke, lettuce, etc.), Liliaceae vegetables (Welsh onion, onion, garlic, asparagus, etc.), Umbelliferae vegetables (carrot, parsley, celery, parsnip, etc.), Chenopodiaceae vegetables (spinach, Swiss chard, etc.), Labiatae vegetables (Japanese basil, mint, basil, etc.), strawberry, sweat potato, yam, aroid, etc.;
Fruit trees: pomaceous fruits (apple, common pear, Japanese pear, Chinese quince, quince, etc.), stone fleshy fruits (peach, plum, nectarine, Japanese plum, cherry, apricot, prune, etc.), citrus plants (Satsuma mandarin, orange, lemon, lime, grapefruit, etc.), nuts (chestnut, walnut, hazel nut, almond, pistachio, cashew nut, macadamia nut, etc.), berry fruits (blueberry, cranberry, blackberry, raspberry, etc.), grape, persimmon, olive, loquat, banana, coffee, date, coconut, oil palm, etc.;
Trees other than fruit trees: tea, mulberry, flowering trees (azalea, camellia, hydrangea, sasanqua, Japanese star anise, cherry, tulip tree, crape myrtle, orange osmanthus, etc.), street trees (ash tree, birch, dogwood, eucalyptus, ginkgo, lilac, maple tree, oak, poplar, cercis, Chinese sweet gum, plane tree, zelkova, Japanese arborvitae, fir tree, Japanese hemlock, needle juniper, pine, spruce, yew, elm, horse chestnut, etc.), coral tree, podocarpus, cedar, Japanese cypress, croton, Euonymus japonicus, Photinia glabra, etc.;
Lawns: Zoysia (zoysiagrass, Zoysia matrella, etc.), Bermuda grasses (Cynodon dactylon, etc.), bent grasses (Agrostis alba, creeping bent grass, hiland bent, etc.), blueglasses (meadow grass, bird grass, etc.), fescue (tall fescue, chewings fescue, creeping red fescue, etc.), ryegrasses (darnel, rye grass, etc.), orchard grass, timothy grass, etc.;
Others: flowers (rose, carnation, chrysanthemum, prairie gentian, gypsophila, gerbera, marigold, salvia, petunia, verbena, tulip, aster, gentian, lily, pansy, cyclamen, orchid, convallaria, lavender, stock, ornamental cabbage, primula, poinsettia, gladiolus, cattleya, daisy, cymbidium, begonia, etc.), bio-fuel plants (Jatropha, safflower, camelina, switchgrass, Miscanthus, reed canary grass, giant reed, kenaf, cassava, willow, etc.), ornamental plants, etc.

Among the above plants, preferred are corn, wheat, rice, etc., and particularly preferred is rice.

The "plant" as used herein may be those having resistance, which is imparted by a genetic modification technology or a conventional breeding method.

The method for controlling a harmful arthropod of the present invention can be carried out in agricultural lands such as fields, paddy fields, dry fields, lawns, and orchards or nonagricultural lands. The area in which a plant is grown is perferably an area in which rice is grown.

### Examples

Hereinafter, the present invention will be described in more detail with reference to Formulation Examples and Test Examples, but not limited thereto. In the Examples, the term "part(s)" means part(s) by weight unless otherwise specified.

Firstly, Formulation Examples will be shown below.

### Formulation Example 1

Fifteen (15) parts of flonicamid, 15 parts of fthalide and 1.37 parts of kasugamycin hydrochloride are added to a mixture of 4 parts of sodium lauryl sulfate, 2 parts of calcium lignosulfonate, 20 parts of a fine powder of synthetic hydrated silicon oxide and 42.63 parts of diatomaceous earth, and then the resultant mixture is sufficiently mixed with stirring to obtain a wettable powder.

### Formulation Example 2

Fifteen (15) parts of flonicamid, 15 parts of fthalide, 1.37 parts of kasugamycin hydrochloride and 5 parts of validamycin A are added to a mixture of 4 parts of sodium lauryl sulfate, 2 parts of calcium lignosulfonate, 20 parts of a fine powder of synthetic hydrated silicon oxide and 37.63 parts of diatomaceous earth, and then the resultant mixture is sufficiently mixed with stirring to obtain a wettable powder.

### Formulation Example 3

One (1) part of flonicamid, 1.5 parts of fthalide, 0.11 parts of kasugamycin hydrochloride, 87.39 parts of kaolin clay and 10 parts of talc are finely-ground and mixed to obtain dusts.

### Formulation Example 4

One (1) part of flonicamid, 1.5 parts of fthalide, 0.11 parts of kasugamycin hydrochloride, 0.3 parts of validamycin A, 87.09 parts of kaolin clay and 10 parts of talc are finely-ground and mixed to obtain dusts.

### Formulation Example 5

A mixture of 8 parts of flonicamid, 4 parts of fthalide, 1 part of kasugamycin hydrochloride, 30 parts of white carbon containing 50 parts of ammonium polyoxyethylene alkylether sulfate and 57 parts of water is finely-ground by a wet grinding method to obtain a suspension concentrate.

### Formulation Example 6

A mixture of 8 parts of flonicamid, 4 parts of fthalide, 1 part of kasugamycin hydrochloride, 3 parts of validamycin A, 30 parts of white carbon containing 50 parts of ammonium polyoxyethylene alkylether sulfate and 54 parts of water is finely-ground by a wet grinding method to obtain a suspension concentrate.

Next, the effects of the present invention will be demonstrated below with reference to Test Examples.

### Test Example 1 (Test for Insecticidal Activity on Rhopalosiphum padi)

Each 30 mg of flonicamid and fthalide was dissolved in 0.3 ml of acetone (manufactured by Wako Pure Chemical Industries, Ltd.) containing SORGEN TW-20 (manufactured by Dai-ichi Kogyo Seiyaku Co., Ltd.) and then diluted with water containing 0.02% by volume of a spreading agent [product name: Dain (registered trademark), manufactured by Sumitomo chemical garden products inc.] to a given concentration. Kasugamycin hydrochloride monohydrate was diluted with water containing 0.02% by volume of a spreading agent (Dain) to a given concentration. The water dilution of flonicamid, the water dilution of fthalide and the water dilution of Kasugamycin were mixed to prepare a test solution.

Each the test solution was sprayed onto a rice seedling (*Oryza sativa,* cultivar: Hoshinoyume) at the 2.5 leaf stage grown in a paper pot in an amount of 10 ml per a seedling. This rice seedling was air-dried and then put into a glass test tube (diameter: 30 mm, height: 200 mm). One day after the spraying, 20 second to third-instar nymphs of *Rhopalosiphum padi* were released into the test tube, and then the tube was placed in a room (25°C, humidity 55%).

Five (5) days after releasing the tested nymphs, the insects were observed for life or death, and the number of surviving insects was counted. For each treatment, there were 2 replicates. The average values are shown in Table 1.

**Table 1**

| Composition Number | Test Compounds | Concentration [ppm] | Number of Surviving Insects [head] |
|---|---|---|---|
| 1 | flonicamid | 20 | |
| | fthalide | 15 | 0 |
| | kasugamycin | 2 | |
| Untreated | - | - | 21 |

### Industrial Applicability

The harmful arthropod control composition of the present invention has an excellent controlling effect on harmful arthropods.

## Claims

1. A harmful arthropod control composition comprising flonicamid, fthalide and kasugamycin hydrochloride.

2. The harmful arthropod control composition according to claim 1, wherein the weight ratio of flonicamid to fthalide is from 100:1 to 1:100.

3. The harmful arthropod control composition according to claim 2, wherein the weight ratio of flonicamid to kasugamycin hydrochloride is from 500:1 to 1:100.

4. A method for controlling a harmful arthropod, which comprises applying an effective amount of the harmful arthropod control composition according to any one of claims 1 to 3 to a plant or an area in which a plant is grown.

5. The method for controlling a harmful arthropod according to claim 4, wherein the plant or the area in which a plant is grown is rice or an area in which rice is grown.
